# EUROPEAN PATENT SPECIFICATION

(11) **EP 3 296 761 B1**
(45) Date of publication and mention of the grant of the patent: **27.10.2021**
(21) Application number: 17189553.5
(22) Date of filing: 06.09.2017
(51) Int. Cl.: G01S 7/4861, G01S 7/497, G01S 17/10

(54) **DISTANCE MEASURING DEVICE**
ENTFERNUNGSMESSVORRICHTUNG
DISPOSITIF DE MESURE DE DISTANCE

(30) Priority: 14.09.2016 JP 2016179309
(43) Date of publication of application: 21.03.2018
(73) Proprietor: Topcon Corporation, Tokyo 174-8580 (JP)
(72) Inventor: MORITA, Hideki, Tokyo 174-8580 (JP); YOSHINO, Ken'ichiro, Tokyo 174-8580 (JP)
(74) Representative: Eisenführ Speiser

(56) References cited:
- EP-A1- 1 942 354
- EP-A2- 1 560 041
- CN-A- 104 296 866

## Description

### BACKGROUND OF THE INVENTION

### Technical Field

The present invention relates to a distance measuring device using pulses of light.

### Background Art

Distance measuring devices using pulses of light are publicly known (for example, refer to Japanese Patent No. 4832720).

These techniques using pulses of light can perform distance measurement with greater accuracy by using a pulse waveform with a narrower pulse width. Directly sampling a pulse waveform by an A/D converter to obtain a digital signal is an ideal method. When a pulse width is narrow, an A/D converter having a high sampling frequency is required. However, the A/D converter having a high sampling frequency tends to (1) be extremely expensive, (2) consume a great amount of power, and (3) generate a great amount of heat.

In response to this problem, as disclosed in Japanese Patent No. 4832720, a method of converting a pulse signal into a damped oscillation waveform by a damping circuit, such as an LC filter, to increase the number of sampling points, was developed.

Distance measuring devices using pulses of light may use a highly sensitive avalanche photodiode (APD) as a photodetector. The APD outputs electric current proportional to the intensity of a beam of detected light when operated under application of a bias voltage. This characteristic is evaluated as an avalanche gain. The characteristic of the avalanche gain varies among products, and thus, a bias voltage to be applied should be finely adjusted in each product in production of distance measuring devices. This adjustment is complicated and is a factor increasing production cost.

CN 104 296 866 A discloses an interface circuit applied to an avalanche photodiode working in a linear mode. The interface circuit is composed of five parts, namely, a front-arranged trans-impedance amplifier, a single-turn dual-circuit, a voltage amplifier, an amplitude detector and a gating circuit. The front-arranged trans-impedance amplifier amplifies weak light induction current signals generated by the avalanche photodiode and converts the weak light induction current signals into voltage signals. The single-turn dual-circuit converts single-end output signals of the front-arranged trans-impedance amplifier into differential signals. The voltage amplifier further amplifies the differential signals to the order at which the differential signals can be distinguished by a comparator. The amplitude detector outputs reasonable digital logic signals according to the changes of signals at the input end of the amplitude detector. The gating circuit is used for controlling the working state of the circuit. The interface circuit is high in detection sensitivity and capable of being applied to detection of single photon signals of the avalanche photodiode. Meanwhile, the working state of the circuit can be controlled through a logic time sequence, the power consumption of the circuit can be effectively lowered, and the interface circuit is suitable for a large scale array detection system.

Document EP 1 942 354 A1 discloses a surveying instrument and a surveying method for further minimizing a measurement error when the surveying instrument casts a light to a measuring object and receives the reflected light and measures a delay time or a distance. A reference pulse light and a measurement pulse light are received as a received light signal by a light receiving section, and a damping signal is formed from the received light signals and an amplification rate of a minute level signal in the proximity of a zero cross paint of the damping signal is greatly amplified, and timing signals are formed by using an amplified signal. Therefore, the measurement error can be minimized.

### SUMMARY OF THE INVENTION

In view of these circumstances, an object of the present invention is to provide a highly accurate distance measuring device at low cost.

An aspect of the present invention provides a distance measuring device using pulses of light, and the device includes an avalanche photodiode, an amplifier circuit, a differential amplifier, damping circuits, and an A/D converter. The avalanche photodiode detects pulsed light that is reflected from an object to be measured. The amplifier circuit converts electric current output from the avalanche photodiode into a voltage pulse signal. The differential amplifier is arranged in a rear stage of the amplifier circuit and differentially amplifies the voltage pulse signal. The damping circuits are arranged in a rear stage of the differential amplifier and convert the pulse signals from the differential amplifier into signals with a damped oscillation waveform. The A/D converter is arranged in a rear stage of the damping circuits and converts the signals with the damped oscillation waveform by A/D conversion. The signal path from the avalanche photodiode to the A/D converter allows a direct current signal to pass therethrough.

The present invention provides a highly accurate distance measuring device at low cost.

### BRIEF DESCRIPTION OF DRAWING

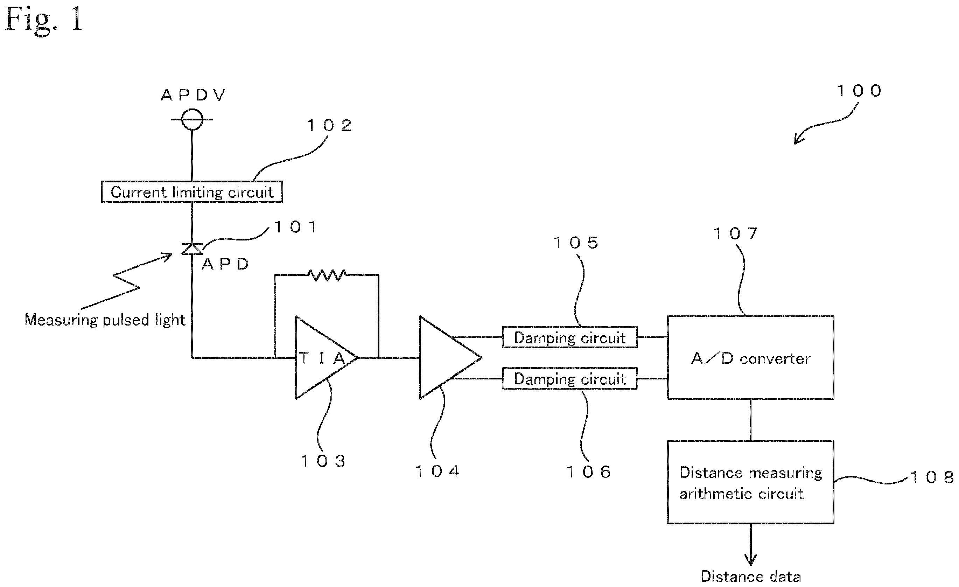

Fig. 1 is a block diagram of an embodiment.

### PREFERRED EMBODIMENT OF THE INVENTION

### Structure

Fig. 1 shows a block diagram of a light receiving system 100 of a distance measuring device using the present invention. The light receiving system 100 includes an avalanche photodiode (APD) 101 that is a light detecting element for detecting distance measurement light (pulsed light) reflected from an object to be measured. The APD 101 is a type of photodiode and is a highly sensitive photoelectric transducer that multiplies photocurrent by a phenomenon called "avalanche multiplication". The APD 101 is configured to be applied with a bias voltage. The bias voltage to be applied is adjusted to achieve a predetermined avalanche gain in each product.

The APD 101 is configured to be applied with the bias voltage through a current limiting circuit 102. The current limiting circuit 102 prevents excessive current from flowing in the APD 101, thereby avoiding the APD 101 from being damaged and deteriorated. The output of the APD 101 is amplified by a transimpedance amplifier (TIA) 103. The TIA 103 is an amplifier that converts an electric current output from the APD 101 into a voltage signal by an I/V conversion, and it can be made using a commercially available operational amplifier.

The APD 101 and the TIA 103 do not have a coupling capacitor therebetween. Thus, the output of the APD 101 is directly amplified by the TIA 103. The output of the TIA 103 is input to a differential amplifier 104 and is differentially amplified thereat. The differential output of the differential amplifier 104 is input to damping circuits 105 and 106, which are respectively formed of an LC circuit.

The APD 101 detects a distance measuring light, which is a pulsed light. The outputs of the APD 101, the TIA 103, and the differential amplifier 104 are also pulse signals. The differential amplifier 104 outputs a positive (hot) differential pulse signal and a negative (cold) differential pulse signal, and these differential pulse signals are converted into signals with a damped oscillation waveform by the damping circuits 105 and 106. The detected signals with the damped oscillation waveform are balanced and input to an A/D converter 107 in a rear stage.

The A/D converter 107 converts the detection signals with the damped oscillation waveform into a digital signal. The output of the A/D converter 107 is input to a distance measuring arithmetic circuit 108, and a measured distance is calculated. The calculation method of the measured distance is the same as, or similar to, the method used in an ordinary distance measuring device using pulses of light. The distance measuring arithmetic circuit 108 may be constructed of a dedicated circuit such as an application specific integrated circuit (ASIC) or a programmable logic device (PLD), such as a field programmable gate array (FPGA).

The distance measuring device may further include a pulsed light emitting circuit, a pulsed light emitting optical system, and a pulsed light receiving optical system, a reference light optical path, an entire operation controlling system, and other components, but these are the same as, or similar to, those in an ordinary distance measuring device using pulses of light, and therefore, details thereof are not described.

### Adjustment

When a voltage applied to the APD 101 exceeds a predetermined value, avalanche breakdown is generated, and electric current is suddenly made to flow. The voltage at this time is a breakdown voltage. The photodetection is performed in a condition in which the APD 101 is applied with a voltage that is lowered by a predetermined value from the breakdown voltage. For example, when the breakdown voltage is 90 V, the photodetection is performed by applying a voltage that is lower than the breakdown voltage, such as 85 V. Under this condition, light irradiating the APD 101 allows electric current to flow in the APD 101 in accordance with the intensity of the light.

The value of the breakdown voltage varies among APDs. The range of the variation is as great as 80 to 150 V, for example. However, even though the breakdown voltage varies among APDs, applying a voltage lower than the breakdown voltage by a predetermined value enables the APD 101 to provide a desired avalanche gain. That is, different APDs can output electric current having the same value when detecting light having the same intensity.

The circuit of this embodiment is made by DC connection from the APD 101 to the A/D converter 107, and a breakdown current of direct electric current can be detected. Thus, the breakdown voltage is easily determined. The voltage to be applied is made lower than the determined breakdown voltage by a predetermined value to adjust the APD 101.

### Advantages

The structure shown in Fig. 1 includes the avalanche photodiode 101, the TIA 103, the differential amplifier 104, and the damping circuits 105 and 106. The avalanche photodiode 101 detects pulsed light that is reflected from an object to be measured. The TIA 103 is an amplifier circuit that converts the electric current output from the avalanche photodiode 101 into a voltage signal. The differential amplifier 104 is arranged in a rear stage of the TIA 103 and differentially amplifies and outputs a pulse signal. The damping circuits 105 and 106 convert the output pulse signals into signals with a damped oscillation waveform. The signal path from the avalanche photodiode 101 to the A/D converter 107 allows a direct current signal to pass therethrough.

The damped oscillation waveform, which is obtained by passing the pulse waveform through each of the damping circuits 105 and 106, is a waveform with damping and repeating oscillation. Even though the same A/D converter having the same sampling frequency is used, a greater number of sampling points that are effective as distance measuring signals is reliably obtained from the damped oscillation waveform compared with the case of using the original pulse waveform. Thus, a sufficient number of sampling points is reliably obtained from a signal even though the signal has a narrow pulse width. This structure enables inexpensive production of a distance measuring device with a high distance measurement accuracy.

The avalanche gain characteristic of the APD 101 varies among products and should be adjusted in each product. The structure shown in Fig. 1 does not include a coupling capacitor between the APD 101 and the TIA 103 and has a DC connection from the APD 101 to the following A/D converter 107. Thus, a breakdown current of direct electric current is detected when the APD occurs breakdown, whereby the breakdown voltage value is determined. The voltage to be applied is made lower based on the breakdown voltage by a predetermined value to adjust the APD in each product. This method is simple and requires no separate circuit for adjusting the APD, thereby preventing increase in the cost for the adjustment.

If damping circuits are arranged immediately after the APD 101, and an amplifier is arranged after the damping circuits, an AC coupling capacitor is required before the amplifier. In this circuit structure, an AC signal is required in adjusting the APD, or a separate circuit to detect the breakdown voltage of the APD is necessary. Naturally, the cost of the part is increased. In contrast, in the present embodiment, the adjustment is performed by using a DC signal and is thus performed simply, as described above. Moreover, there is no need for a circuit for the AC signal and for a circuit to be used only for detecting the breakdown of the APD.

## Claims

1. A distance measuring device using pulses of light, comprising:
an avalanche photodiode (101) that detects pulsed light reflected from an object to be measured;
an amplifier circuit (103) that converts electric current output from the avalanche photodiode (101) into a voltage pulse signal;
a differential amplifier (104) that is arranged in a rear stage of the amplifier circuit (103) and that differentially amplifies the voltage pulse signal;
damping circuits (105, 106) that are arranged in a rear stage of the differential amplifier (104) and that convert the pulse signals from the differential amplifier (104) into signals with a damped oscillation waveform; and
an A/D converter (107) that is arranged in a rear stage of the damping circuits (105, 106) and that converts the signals with the damped oscillation waveform by A/D conversion,
wherein the signal path from the avalanche photodiode (101) to the A/D converter (107) allows a direct current signal to pass therethrough.

## Patentansprüche

1. Abstandsmessvorrichtung, die Lichtimpulse verwendet, umfassend:
eine Avalanche-Photodiode (101), die gepulstes Licht, das von einem zu messenden Objekt reflektiert wird, erfasst
eine Verstärkerschaltung (103), die den von der Avalanche-Photodiode (101) ausgegebenen elektrischen Strom in ein Spannungsimpulssignal umwandelt;
einen Differenzverstärker (104), der in einer hinteren Stufe der Verstärkerschaltung (103) angeordnet ist und der das Spannungsimpulssignal differenzverstärkt;
Dämpfungsschaltungen (105, 106), die in einer hinteren Stufe des Differenzverstärkers (104) angeordnet sind und die die Impulssignale des Differenzverstärkers (104) in Signale mit einer gedämpften Schwingungswellenform umwandeln; und
einen A/D-Wandler (107), der in einer hinteren Stufe der Dämpfungsschaltungen (105, 106) angeordnet ist und der die Signale mit der gedämpften Schwingungswellenform durch A/D-Wandlung umwandelt,
wobei der Signalpfad von der Avalanche-Photodiode (101) zu dem A/D-Wandler (107) ein Gleichstromsignal durchlässt.

## Revendications

1. Dispositif de mesure de distance utilisant des impulsions de lumière, comprenant:
une photodiode à avalanche (101) qui détecte de la lumière pulsée réfléchie par un objet à mesurer;
un circuit amplificateur (103) qui convertit le courant électrique délivré par la photodiode à avalanche (101) en un signal d'impulsion de tension;
un amplificateur différentiel (104) qui est disposé dans un étage arrière du circuit amplificateur (103) et qui amplifie de manière différentielle le signal d'impulsion de tension;
des circuits d'amortissement (105, 106) qui sont disposés dans un étage arrière de l'amplificateur différentiel (104) et qui convertissent les signaux d'impulsion provenant de l'amplificateur différentiel (104) en signaux ayant une forme d'onde d'oscillation amortie; et
un convertisseur A/N (107) qui est disposé dans un étage arrière des circuits d'amortissement (105, 106) et qui convertit par conversion A/N les signaux ayant la forme d'onde d'oscillation amortie,
dans lequel le chemin de signal de la photodiode à avalanche (101) au convertisseur A/N (107) permet à un signal de courant continu de le traverser.
